# EUROPÄISCHE PATENTSCHRIFT

(11) **EP 3 542 156 B1**
(45) Veröffentlichungstag und Bekanntmachung des Hinweises auf die Patenterteilung: **22.07.2026**
(21) Anmeldenummer: 17797957.2
(22) Anmeldetag: 15.11.2017
(51) Int. Cl.: G01N 29/04, G01N 29/11, G01N 29/22, G01N 29/34, G01N 29/24

(54) **VERFAHREN UND VORRICHTUNG ZUR PRÜFUNG EINER ROHRLEITUNG AUF FEHLSTELLEN**
METHOD AND DEVICE FOR CHECKING A PIPE FOR FLAWS
PROCÉDÉ ET DISPOSITIF DE CONTRÔLE D'UN TUYAU QUANT À DES ZONES DÉFECTUEUSES

(30) Priorität: 18.11.2016 DE 102016122230
(43) Veröffentlichungstag der Anmeldung: 25.09.2019
(73) Patentinhaber: NDT Global Corporate Ltd. Ireland, Dublin 9 (IE)
(72) Erfinder: WERLE, Michael, D09 A0E4 Dublin (IE); HENNIG, Thomas, D09 A0E4 Dublin (IE); HABERL, Peter, D09 A0E4 Dublin (IE)
(74) Vertreter: Global IP Europe Patentanwaltskanzlei
(86) Internationale Anmeldenummer: PCT/EP2017/079354
(87) Internationale Veröffentlichungsnummer: WO 2018/091548

(56) Entgegenhaltungen:
- EP-A2- 0 177 053
- EP-A2- 0 232 613
- EP-A2- 0 997 731
- WO-A1-2008/010712
- JP-A- 2015 172 495
- US-A- 3 512 400
- US-A- 4 137 779
- US-A- 4 305 297
- US-A1- 2006 201 252
- US-A1- 2015 068 311

## Beschreibung

### Technisches Gebiet

Die vorliegende Erfindung betrifft ein Verfahren und eine Vorrichtung zur Prüfung eines Objekts auf Fehlstellen.

### Hintergrund

Eine Prüfung eines Objekts auf Fehlstellen ist in vielen technischen Bereichen relevant.

Beispielsweise ist es bei Rohrleitungen, die für den Transport eines Fluids vorgesehen sind, zur Gewährleistung eines möglichst verlustlosen Transports, neben einer Endprüfung der Rohrleitung nach ihrer Fertigung / Montage, unabdingbar, die Rohrleitung in gewissen zeitlichen Abständen oder nach Feststellen einer Leckage auf Fehlstellen zu untersuchen.

Zu diesem Zweck kann die zu untersuchende Rohrleitung beispielsweise mittels Ultraschall, Magnetstreufluß oder Wirbelstrom zerstörungsfrei und in-situ geprüft werden. Bei einer solchen Prüfung wird etwa eine Anordnung aus Ultraschallsendern und -empfängern auf einem sogenannten Molch montiert und der Molch in die Leitung eingesetzt. Der Molch fährt dann durch die Rohrleitung und nimmt die Sensorsignale als Funktion der zurückgelegten Wegstrecke auf. Nach Beendigung oder sogar während der Untersuchung können die gespeicherten Sensorsignale ausgelesen und analysiert werden.

Dabei können durch relativ zur Rohrwand senkrechte Einstrahlung von beispielsweise Ultraschall Materialverluste (z.B. aufgrund von Korrosion) und andere flächige, parallel zur Rohrwand liegende Fehler erkannt werden (Wanddickenmessung). Durch schräge Einstrahlung können Risse und andere Fehler, die senkrecht zur Rohrwand liegen, detektiert werden (Rissprüfung).

Ein Verfahren, welches insbesondere bei der Rissprüfung zum Einsatz kommt, ist das sogenannte (Im-)Puls-Echo-Verfahren. Dabei wird die ausgesendete Schallwelle an Fehlstellen teilweise oder vollständig gestreut bzw. reflektiert. Ein zurücklaufendes Echo wird entsprechend empfangen und in eine Risstiefe umgewandelt. Jedoch zeigt dieses Verfahren bei Rissen von mehr als ca. 4 mm ein Sättigungsverhalten. Mit diesem Verfahren sind daher bislang keine genauen und absoluten Aussagen zu Rissen mit größeren Risstiefen möglich. Weiterhin nimmt die Sensitivität dieses Verfahrens gegenüber nicht radial / axial ausgerichteten Defekten mit zunehmender Fehlstellung ab.

Eine zu lösende Aufgabe kann somit darin gesehen werden, eine Rissprüfung mit höherer Genauigkeit und über einen größeren Bereich durchführen zu können.

EP 0 997 731 A2 offenbart ein Verfahren zum Bewerten der Qualität einer Verbindung zwischen zwei metallischen Rohrabschnitten mittels zwei separater Ultraschall-Wandler. Die Wandler werden beispielsweise auf die Außenfläche des Rohrs angebracht, wobei nur ein Wandler auf jeder Seite der Verbindung liegt. Zum Beispiel wird zuerst geprüft, ob ein reflektiertes Echo eine erste Schwelle überschreitet. Wenn ja, weist es auf einen Defekt hin. Falls die erste Schwelle nicht überschritten wird, erfolgt eine weitere Messung eines Übertragungsechowerts zwischen den Wandlern. Wenn der gemessene Übertragungsechowert einer zweiten Schwelle unterliegt, deutet es auf eine fehlerhafte Verbindung zwischen den Rohrabschnitten. In einigen Ausführungsbeispielen werden die Ultraschall-Wandler für Messungen der reflektierten Echos so eingestellt, dass kein Ultraschall zwischen den Wandlern übertragen wird.

JP 2015 172495 A offenbart eine Rohrinspektionsvorrichtung umfassend eine Übertragungssonde, die eine Ultraschallwelle durch Raumausbreitung schräg auf eine Innenumfangsfläche einer Rohrwand eines Inspektionsobjektrohrs einfallen lässt und eine Empfangssonde, die die Ultraschallwelle empfängt, die sich in der Rohrwand ausbreitet und von der Innenumfangsfläche durch die Raumausbreitung ausgegeben wird. Ein Schallwellenblockierkörper ist zwischen der Sendesonde und der Empfangssonde angeordnet, um die Ultraschallwellen, die von der Sendesonde in Richtung der Empfangssonde abgegeben werden, durch die Raumausbreitung zu blockieren.

US 3,512,400 A beschreibt ein Ultraschalltestverfahren einer Probe mittels Scherwellensensoren. Der einfallende Winkel ist auswählbar, um entweder Ultraschallwellen in SV Scherwellenmodus oder Rayleigh-Wellen / Lamb-Wellen in das Probematerial einzuspeisen.

US 2006/0201252 A1 und US 4,305,297 A beschreiben Prüfungsverfahren, in denen die "Pitch-Catch" und "Pulse-Echo" Modi verwendet werden.

WO 2008/010712 A1 beschreibt ein Detektionssystem, bei dem eine Vielzahl von Ultraschallwandlern auf einem Körper angeordnet sind. Das von einem Ultraschallwandler emittierte Signal wird an der Rohrwand reflektiert und von dem gleichen Ultraschallwandler oder einem dazu benachbarten Wandler gemessen.

US 2015/0068311 A1 beschreibt eine Ultraschall-Rohrmessvorrichtung mit einer Vielzahl von Ultraschall-Sende-Empfängern, die an der äußeren Rohrwand eines Rohres angeordnet sind. Die von den Ultraschall-Sendern emittierten Ultraschallwellen werden in die Rohrwand des Rohrs eingekoppelt und breiten sich entlang diesem aus und werden schließlich von einem Ultraschall-Empfänger gemessen.

### Abriss der Erfindung

Die oben beschriebene Aufgabe wird durch ein Verfahren zur Inspektion einer Rohrleitung gemäß dem unabhängigen Anspruch 1 und eine Vorrichtung zur Inspektion einer Rohrleitung gemäß dem unabhängigen Anspruch 8 gelöst. Die abhängigen Ansprüche definieren bevorzugte Ausführungsformen.

Das Verfahren gemäß Anspruch 1 umfasst die Schritte: Anordnen eines ersten Ultraschall-Wandlers und eines zweiten Ultraschall-Wandlers auf der Innenseite der Rohrleitung; Aussenden eines in einer ersten Richtung in der Rohrleitung verlaufenden ersten Signals mittels des ersten Ultraschall-Wandlers; und Empfangen eines aus einer zweiten Richtung in der Rohrleitung kommenden ersten Antwortsignals mittels des zweiten Ultraschall-Wandlers, wobei die erste Richtung und die zweite Richtung voneinander verschieden sind und wobei die erste Richtung und die zweite Richtung eine jeweilige Ausbreitungskomponente senkrecht zu einer der Oberflächen der Rohrleitung aufweisen. Das Verfahren umfasst ferner die Schritte: Empfangen eines aus der ersten Richtung in der Rohrleitung kommenden zweiten Antwortsignals, in Antwort auf das erste Signal, mittels des ersten Ultraschall-Wandlers; Aussenden eines in der zweiten Richtung in der Rohrleitung verlaufenden zweiten Signals mittels des zweiten Ultraschall-Wandlers; und Empfangen, in Antwort auf das Aussenden des zweiten Signals, eines aus der ersten Richtung in der Rohrleitung kommenden dritten Antwortsignals mittels des ersten Ultraschall-Wandlers. Das Verfahren ist dadurch gekennzeichnet, dass das erste Signal und das zweite Signal zeitgleich ausgesendet werden.

Diesem Aspekt liegt die überraschende Erkenntnis zugrunde, dass mit Hilfe dieses Verfahrens / dieser Geometrie eine Rissprüfung mit höherer Genauigkeit durchgeführt werden kann. Die der Erfindung zugrunde liegende Erkenntnis besteht ferner darin, dass das erste Antwortsignal zur Detektion einer Fehlstelle verwendet werden kann. Insbesondere können nicht radial / axial ausgerichtete Defekte mit Hilfe dieses aufeinander abgestimmten Wandler-Paares besser und zum Teil überhaupt erst erkannt werden. Mit Hilfe dieses Verfahrens können, etwa im Falle einer Rohrleitung, Risse sowohl auf der Außenseite als auch der Innenseite erkannt werden. Ferner sind auch nicht-oberflächenverbundene 'mid-wall' Defekte hiermit detektierbar.

Das in der ersten Richtung in dem Objekt verlaufende erste Signal bzw. das aus der zweiten Richtung kommende erste Antwortsignal betreffen bevorzugt (Ausbreitungs)Richtungen dieser Signale, die sie unmittelbar nach dem Eintritt (im Falle des ersten Signals) bzw. vor dem Austritt (im Falle des ersten Antwortsignals) aus dem Objekt haben. Dazwischen sind Reflektionen, Beugungen oder sogenannte Skips im Inneren des Objekts bzw. an den Ober-/Grenzflächen des Objekts möglich. Gleiches gilt auch für die weiteren nachfolgend genannten Signale. Besonders bevorzugt weisen die erste Richtung und / oder die zweite Richtung eine jeweilige Ausbreitungskomponente senkrecht zu einer der Oberflächen des Objekts auf. Insbesondere kann dies dadurch erreicht werden, dass die Signale von außerhalb des Objekts eingestrahlt bzw. empfangen werden.

Der erste und der zweite Wandler können jeweils als eigenständige Ultraschall-Wandler ausgebildet sein, die insbesondere (physisch) separat voneinander ausgebildet und angeordnet sein können. Alternativ können sie auch jeweils in Form oder als Teil eines Gruppenstrahlers oder einer sogenannten "Phased-Array"-Anordnung ausgebildet sein. Die Wandler können beispielsweise Piezo-Wandler sein, die in einem gewissen Abstand zum Objekt angeordnet sind und das erste Signal auf eine erste Oberfläche des Objekts hin abstrahlen bzw. das erste Antwortsignal von der ersten (oder einer anderen) Oberfläche des Objekts kommend empfangen. In diesem Fall dient ein Kontaktmedium zur Übertragung der Signale zwischen dem Wandler und dem Objekt - in einer zu inspizierenden Rohrleitung beispielsweise ein die Rohrleitung durchströmendes Fluid. Alternativ können aber auch elektromagnetisch-akustische Wandler verwendet werden.

Das Verfahren kann ferner den Schritt umfassen des Anordnens des ersten Ultraschall-Wandlers und des zweiten Ultraschall-Wandlers auf derselben Seite des Objekts. Bei einer Rohrleitungsinspektion sind hierbei beide Wandler auf der Innenseite der Rohrleitung angeordnet. Bevorzugt sind der erste Ultraschall-Wandler und/oder der zweite Ultraschall-Wandler in einem Abstand zum Objekt angeordnet, ohne also in Kontakt mit dem Objekt zu stehen.

Dabei können die erste Richtung und die zweite Richtung jeweils (bis auf Vorzeichen) im Wesentlichen den gleichen Winkel mit der den Ultraschall-Wandlern zugewandten Seite des Objekts bilden.

Das Verfahren kann ferner den zusätzlichen Schritt umfassen des Empfangens eines aus der ersten Richtung in dem Objekt kommenden zweiten Antwortsignals, in Antwort auf das erste Signal, mittels des ersten Ultraschall-Wandlers. Zur Verbesserung der Genauigkeit kann somit auch ein Puls-Echo-Verfahren zum Einsatz kommen.

Das Verfahren umfasst ferner die folgenden Schritte Aussenden eines in der zweiten Richtung in dem Objekt verlaufenden zweiten Signals mittels des zweiten Ultraschall-Wandlers; und
Empfangen, in Antwort auf das Aussenden des zweiten Signals, eines aus der ersten Richtung in dem Objekt kommenden dritten Antwortsignals mittels des ersten Ultraschall-Wandlers.

Hierdurch ist es möglich, das Objekt in "umgekehrter" Richtung zu durchschallen. Aus dem Vergleich der Messergebnisse und insbesondere des zeitlichen Verlaufs der Amplitude des Messsignals in Vorwärts- und Rückwärtsrichtung insbesondere im Vergleich zum Puls-Echo-Signal können wertvolle (zusätzliche) Informationen gewonnen werden, insbesondere in Bezug auf eine Schrägstellung eines Risses. Das Verfahren kann ferner den zusätzlichen Schritt umfassen des Empfangens eines aus der zweiten Richtung kommenden vierten, von dem zweiten Signal hervorgerufenen Antwortsignals mittels des zweiten Ultraschall-Wandlers.

Das Verfahren kann auch den Schritt des Speicherns und Auswertens des ersten, zweiten, dritten und/oder vierten Antwortsignals zur Charakterisierung einer Fehlstelle umfassen. Alternativ oder zusätzlich kann die Vorrichtung beispielsweise eine Sende-Empfangs-Einheit umfassen, um die empfangenen Signale / Daten unmittelbar oder zeitverzögert (nach Zwischenspeicherung in einem Pufferspeicher) mit einer entfernten Auswerteeinheit auszutauschen.

Ein zweiter Aspekt der vorliegenden Erfindung betrifft eine Vorrichtung zur Inspektion eines Objekts, insbesondere einer Rohrleitung, auf Fehlstellen, umfassend
einen ersten Ultraschall-Wandler, welcher dazu eingerichtet ist, ein in einer ersten Richtung in dem Objekt verlaufendes erstes Signal auszusenden; und
einen zweiten Ultraschall-Wandler, welcher dazu eingerichtet ist, ein aus einer zweiten Richtung in dem Objekt kommendes erstes Antwortsignal zu empfangen, wobei die erste Richtung und die zweite Richtung voneinander verschieden sind.

Der erste Ultraschall-Wandler und der zweite Ultraschall-Wandler können auf derselben Seite des Objekts angeordnet sein. Bevorzugt bilden dabei die erste Richtung und die zweite Richtung jeweils im Wesentlichen den gleichen Winkel mit der den Ultraschall-Wandlern zugewandten Seite des Objekts, also der Rohrinnenseite der zu inspizierenden Rohrleitung.

Der erste Ultraschall-Wandler kann dazu eingerichtet sein, ein aus der ersten Richtung in dem Objekt kommendes zweites Antwortsignal, in Antwort auf das erste Signal, zu empfangen

Ferner kann der zweite Ultraschall-Wandler dazu eingerichtet sein, ein in der zweiten Richtung in dem Objekt verlaufendes zweites Signal auszusenden, wobei der erste Ultraschall-Wandler dazu eingerichtet ist, ein aus der ersten Richtung in dem Objekt kommendes drittes Antwortsignal mittels des ersten Ultraschall-Wandlers, in Antwort auf das Aussenden des zweiten Signals, zu empfangen. Der zweite Ultraschall-Wandler kann ferner dazu eingerichtet sein, ein aus der zweiten Richtung kommendes viertes, von dem zweiten Signal hervorgerufenes Antwortsignal zu empfangen.

Die Vorrichtung kann einen Speicher und eine Auswerteeinheit umfassen zum Speichern und Auswerten des ersten, zweiten, dritten und/oder vierten Antwortsignals zur Charakterisierung einer Fehlstelle. Alternativ oder zusätzlich kann die Vorrichtung beispielsweise eine Sende-Empfangs-Einheit umfassen, um die empfangenen Signale / Daten unmittelbar oder zeitverzögert (nach Zwischenspeicherung in einem Pufferspeicher) mit einer entfernten Auswerteeinheit auszutauschen.

Eine Vorrichtung gemäß dem zweiten Aspekt kann beispielsweise in einem Molch zur Rohrleitungsinspektion zum Einsatz kommen.

Ein dritter Aspekt betrifft die Verwendung einer Vorrichtung oder eines Molchs gemäß dem zweiten Aspekt zur Prüfung eines Objekts, insbesondere einer Rohrwand, auf Fehlstellen.

### Kurze Beschreibung der Figuren

Nachfolgend werden beispielhafte Ausführungsformen der Erfindung anhand der folgenden Figuren beschrieben:
Figur 1 zeigt ein an einem Objekt mit einem im Wesentlichen senkrecht zu den Oberflächen des Objekts verlaufenden Riss durchgeführtes Ultraschall-Verfahren;
Figuren 2 zeigt ein an einem Objekt mit einem schräg zu den Oberflächen des Objekts verlaufenden Riss durchgeführtes Ultraschall-Verfahren.

### Detaillierte Beschreibung

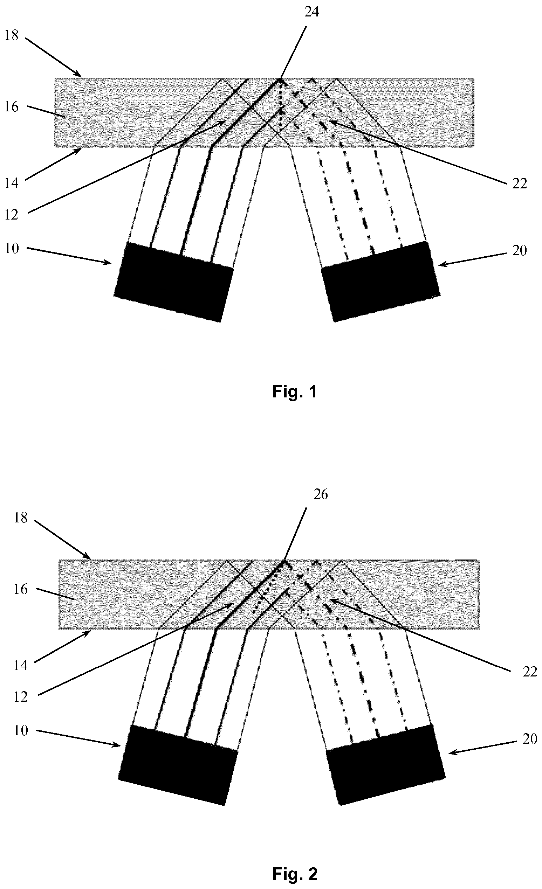

Ausführungsformen der beanspruchten Erfindung werden nachfolgend unter Bezugnahme auf die Figuren 1 und 2 beschrieben.

Figur 1 zeigt eine Vorrichtung, bei der ein erster Ultraschall-Wandler 10 ein erstes Ultraschallsignal 12 hin zu einer ersten Oberfläche 14 eines Objekts 16 aussendet. Das Objekt 16 ist in diesem Beispiel eine Rohrwand und die erste Oberfläche 14 wird durch die Rohrinnenseite gebildet.

Das Ultraschallsignal 12 ist in diesem Beispiel ein gepulstes Signal oder anderweitig moduliertes Signal. Der erste Wandler 10 kann beispielsweise als piezoelektrischer Wandler ausgestaltet sein. Er kann sowohl als Sender als auch als Empfänger fungieren.

Das solchermaßen ausgesendete Signal 12 tritt über die erste Oberfläche 14 in Form der Rohrinnenseite in das Objekt 16 ein und durchläuft das Objekt 16 in einer ersten Richtung, bis es auf eine zweite Oberfläche 18 des Objekts 16 trifft. Die zweite Oberfläche 18 wird in diesem Beispiel von der Rohraußenseite gebildet. Das von dem Wandler 10 ausgesendete Ultraschall-Signal 12 breitet sich dabei üblicherweise als Transversal-/Scherwelle in dem Objekt 16 aus.

Das sich in der ersten Richtung ausbreitende Signal 12 schließt mit der Rohrinnenseite einen ersten Winkel von etwa 45 Grad ein.

An der zweiten Oberfläche 18 wird das Signal zumindest teilweise reflektiert und läuft zur ersten Oberfläche 14 des Objekts 16 als erstes Antwortsignal 22 in einer zweiten Richtung zurück, wo es aus dem Objekt 16 zumindest teilweise austritt und von einem zweiten Ultraschall-Wandler 20 empfangen wird.

Der zweite Wandler 20 kann beispielsweise ebenfalls als piezoelektrischer Wandler ausgestaltet sein. Auch der zweite Wandler 20 kann sowohl als Sender als auch als Empfänger fungieren.

Das in der zweiten Richtung laufende Antwortsignal 22 schließt dabei mit der Rohrinnenseite einen zweiten Winkel von ebenfalls etwa 45 Grad ein. Man erkennt, dass der Strahlengang im Wesentlichen symmetrisch ist und der erste Winkel mit dem zweiten Winkel im Wesentlichen übereinstimmt.

In der in Figur 1 gezeigten Konstellation befindet sich ein senkrecht zu den Oberflächen 14, 18 des Objekts 16 verlaufender Riss 24 im Strahlengang. Dieser Riss 24 führt zu einer Abschattung / Abschwächung des in dem zweiten Ultraschall-Wandler 20 empfangenen Antwortsignals 22 und speziell zu einer Verringerung der detektierten Amplitude des Antwortsignals 22.

Dieses Prinzip führt auch zu einer positiven Detektion der in der Figur 2 gezeigten Fehlstelle. Der Aufbau und insbesondere die Lage / Orientierung der beiden Wandler 10, 20 ist vergleichbar mit dem der Figur 1. Jedoch verläuft der in der Figur 2 gezeigte Riss 26 schräg (also nicht senkrecht) zu den Oberflächen 14, 18 des Objekts 16. Auch hier kommt es jedoch zu einer Abschattung / Abschwächung des in dem zweiten Ultraschall-Wandler 20 empfangenen Antwortsignals 22 und speziell zu einer Verringerung der detektierten Amplitude des Antwortsignals 22.

Ergänzend kann der erste Ultraschall-Wandler 10 auch in einem "klassischen" Puls-Echo-Verfahren betrieben werden. In der Figur 1 empfängt der erste Ultraschall-Wandler 10 dabei ein aus der ersten Richtung kommendes zweites Antwortsignal (nicht gezeigt), welches im Wesentlichen von dem Echo an dem Riss 24 gebildet wird. In der Figur 2 empfängt der erste Ultraschall-Wandler 10, wenn überhaupt, nur ein im Vergleich zur Situation der Figur 1 deutlich schwächeres zweites Antwortsignal, welches im Wesentlichen von dem Echo an dem Riss 26 gebildet wird.

Mit dem "klassischen" Puls-Echo-Verfahren wäre der in der Figur 2 gezeigte Riss 26 somit gar nicht oder nur mit deutlich höherem Aufwand überhaupt zu erkennen. Weiterhin ist die Tiefenbestimmung mittels "klassischem" Puls-Echo_Verfahren nicht mit entsprechender Genauigkeit möglich.

Hingegen können auch schräg verlaufende Fehlstellen mit dem vorstehend beschriebenen Verfahren erkannt und sogar quantifiziert werden.

Durch die Kombination beider Messverfahren kann die Detektionswahrscheinlichkeit und -genauigkeit weiter erhöht werden.

Eine weitere Verbesserung der Detektionswahrscheinlichkeit und -genauigkeit wird darüber erzielt, indem das Objekt 16 sowohl in Vorwärts- als auch in Rückwärtsrichtung durchschallt wird. Dabei wird zeitgleich mit dem Aussenden des ersten Signals 12 ein zweites Signal (nicht gezeigt) in der zweiten Richtung in dem Objekt 16 mittels des zweiten Ultraschall-Wandlers 20 erzeugt. Der erste Ultraschall-Wandler 10 empfängt dann aus der ersten Richtung von dem Objekt kommend ein drittes, von dem zweiten Signal hervorgerufenes Antwortsignal. Zusätzlich kann auch der das zweite Signal aussendende zweite Ultraschall-Wandler 20 in Reaktion auf das zweite Signal ein viertes Antwortsignal (als Puls-Echo-Signal) empfangen, um die Auswertungsgenauigkeit weiter zu erhöhen.

Die erforderliche Ansteuerung der Wandler sowie die Signal-Speicherung / Auswertung sind nicht ausdrücklich beschrieben worden und können auf verschiedene Arten realisiert werden, die dem Fachmann bekannt sind.

## Patentansprüche

1. Verfahren zur Inspektion einer Rohrleitung (16) auf Fehlstellen, wobei das Verfahren folgende Schritte umfasst
Anordnen eines ersten Ultraschall-Wandlers (10) und eines zweiten Ultraschall-Wandlers (20) auf der Innenseite (14) der Rohrleitung;
Aussenden eines in einer ersten Richtung in der Rohrleitung verlaufenden ersten Signals (12) mittels des ersten Ultraschall-Wandlers (10); und
Empfangen eines aus einer zweiten Richtung in der Rohrleitung kommenden ersten Antwortsignals (22) mittels des zweiten Ultraschall-Wandlers (20),
wobei die erste Richtung und die zweite Richtung voneinander verschieden sind und wobei die erste Richtung und die zweite Richtung eine jeweilige Ausbreitungskomponente senkrecht zu einer der Oberflächen der Rohrleitung aufweisen;
wobei das Verfahren ferner die folgenden Schritte umfasst
Empfangen eines aus der ersten Richtung in der Rohrleitung kommenden zweiten Antwortsignals, in Antwort auf das erste Signal, mittels des ersten Ultraschall-Wandlers (10);
Aussenden eines in der zweiten Richtung in der Rohrleitung verlaufenden zweiten Signals mittels des zweiten Ultraschall-Wandlers (20); und
Empfangen, in Antwort auf das Aussenden des zweiten Signals, eines aus der ersten Richtung in der Rohrleitung kommenden dritten Antwortsignals mittels des ersten Ultraschall-Wandlers (10),
**dadurch gekennzeichnet, dass** das erste Signal (12) und das zweite Signal zeitgleich ausgesendet werden.

2. Verfahren nach Anspruch 1, wobei die erste Richtung und die zweite Richtung jeweils im Wesentlichen den gleichen Winkel mit der den Ultraschall-Wandlern (10, 20) zugewandten Seite der Rohrleitung bilden.

3. Verfahren nach einem der vorhergehenden Ansprüche, welches ferner den Schritt umfasst des Empfangens eines aus der zweiten Richtung in der Rohrleitung kommenden vierten Antwortsignals, in Antwort auf das zweite Signal, mittels des zweiten Ultraschall-Wandlers (20).

4. Verfahren nach einem der vorhergehenden Ansprüche, welches ferner den Schritt umfasst des Speicherns und Auswertens des ersten, zweiten, dritten und / oder vierten Antwortsignals zur Charakterisierung einer Fehlstelle.

5. Verfahren nach einem der vorhergehenden Ansprüche, wobei das erste Signal (12) über die Innenseite der Rohrleitung in diese eindringt und an einer Außenseite (18) der Rohrleitung zumindest teilweise reflektiert wird und als das erste Antwortsignal (22) in der zweiten Richtung verläuft.

6. Verfahren nach dem vorherigen Anspruch, wobei das erste Signal mit der Innenseite einen ersten Winkel von etwa 45 Grad einschließt und/oder wobei das erste Antwortsignal mit der Innenseite einen zweiten Winkel von etwa 45 Grad einschließt.

7. Verfahren nach einem der vorhergehenden Ansprüche, wobei der erste Ultraschall-Wandler und der zweite Ultraschall-Wandler in einem Abstand zur Rohrleitung angeordnet sind.

8. Vorrichtung zur Inspektion einer Rohrleitung auf Fehlstellen, umfassend einen ersten Ultraschall-Wandler (10),
einen zweiten Ultraschall-Wandler (20), und
eine Ansteuerungseinheit,
wobei die Vorrichtung derart konfiguriert ist, wenn der erste Ultraschall-Wandler (10) und der zweite Ultraschall-Wandler (20) auf der Innenseite der Rohrleitung angeordnet sind, folgende Schritte auszuführen
Aussenden eines in einer ersten Richtung in der Rohrleitung verlaufenden ersten Signals (12) mittels des ersten Ultraschall-Wandlers (10); und
Empfangen eines aus einer zweiten Richtung in der Rohrleitung kommenden ersten Antwortsignals (22) mittels des zweiten Ultraschall-Wandlers (20),
wobei die erste Richtung und die zweite Richtung voneinander verschieden sind und wobei die erste Richtung und die zweite Richtung eine jeweilige Ausbreitungskomponente senkrecht zu einer der Oberflächen der Rohrleitung aufweisen;
wobei die Ansteuerungseinheit ferner konfiguriert ist, folgende Schritt auszuführen
Empfangen eines aus der ersten Richtung in der Rohrleitung kommenden zweiten Antwortsignals, in Antwort auf das erste Signal, mittels des ersten Ultraschall-Wandlers (10);
Aussenden eines in der zweiten Richtung in der Rohrleitung verlaufenden zweiten Signals mittels des zweiten Ultraschall-Wandlers (20); und
Empfangen, in Antwort auf das Aussenden des zweiten Signals, eines aus der ersten Richtung in der Rohrleitung kommenden dritten Antwortsignals mittels des ersten Ultraschall-Wandlers (10),
**dadurch gekennzeichnet, dass** die Vorrichtung konfiguriert ist, das erste Signal (12) und das zweite Signal zeitgleich auszusenden.

9. Vorrichtung nach dem vorherigen Anspruch, wobei die erste Richtung und die zweite Richtung jeweils im Wesentlichen den gleichen Winkel mit der den Ultraschall-Wandlern (10, 20) zugewandten Seite der Rohrleitung bilden.

10. Vorrichtung nach einem der beiden vorherigen Ansprüche, wobei die Ansteuerungseinheit ferner konfiguriert ist, den Schritt eines Empfangens eines aus der zweiten Richtung in der Rohrleitung kommenden vierten Antwortsignals in Antwort auf das zweite Signal mittels des zweiten Ultraschall-Wandlers (20) auszuführen.

11. Vorrichtung nach einem der Ansprüche 8 bis 10, welche ferner einen Speicher und eine Auswerteeinheit umfasst zum Speichern und Auswerten des ersten, zweiten, dritten und / oder vierten Antwortsignals zur Charakterisierung einer Fehlstelle.

12. Molch zur Rohrleitungsinspektion mit einer Vorrichtung gemäß einem der Ansprüche 8 bis 11, wobei der Molch dazu eingerichtet ist, in eine Rohrleitung eingesetzt zu werden und die Wandung der Rohrleitung von Innen zu inspizieren.

13. Verwendung einer Vorrichtung gemäß einem der Ansprüche 8 bis 11 oder eines Molches gemäß Anspruch 12 zur Inspektion einer Rohrleitung auf Fehlstellen.

## Claims

1. Method for inspecting a pipeline (16) for flaws, the method comprising the following steps
arranging a first ultrasonic transducer (10) and a second ultrasonic transducer (20) on the inside (14) of the pipeline;
emitting a first signal (12), which runs in a first direction in the pipeline, by means of the first ultrasonic transducer (10); and
receiving a first response signal (22), which comes from a second direction in the pipeline, by means of the second ultrasonic transducer (20),
wherein the first direction and the second direction are different from each other, and wherein the first direction and the second direction have a respective propagation component perpendicular to one of the surfaces of the pipeline;
the method further comprising the following steps
receiving a second response signal, which comes from the first direction in the pipeline, by means of the first ultrasonic transducer (10) in response to the first signal;
emitting a second signal, which runs in the second direction in the pipeline, by means of the second ultrasonic transducer (20); and
receiving a third response signal, which comes from the first direction in the pipeline, by means of the first ultrasonic transducer (10) in response to the emission of the second signal,
**characterized in that** the first signal (12) and the second signal are emitted at the same time.

2. Method according to claim 1, wherein the first direction and the second direction each form substantially the same angle with the side of the pipeline facing toward the ultrasonic transducers (10, 20).

3. Method according to any of the preceding claims, further comprising the step of receiving a fourth response signal, which comes from the second direction in the pipeline, by means of the second ultrasonic transducer (20) in response to the second signal.

4. Method according to any of the preceding claims, further comprising the step of storing and evaluating the first, second, third and/or fourth response signal in order to characterize a flaw.

5. Method according to any of the preceding claims, wherein the first signal (12) enters the pipeline via the inside thereof and is at least partially reflected on an outside (18) of the pipeline and runs in the second direction as the first response signal (22).

6. Method according to the preceding claim, wherein the first signal encloses a first angle of approximately 45 degrees with the inside, and/or wherein the first response signal encloses a second angle of approximately 45 degrees with the inside.

7. Method according to any of the preceding claims, wherein the first ultrasonic transducer and the second ultrasonic transducer are arranged at a spacing from the pipeline.

8. Device for inspecting a pipeline for flaws, comprising
a first ultrasonic transducer (10),
a second ultrasonic transducer (20), and
an actuation unit,
wherein the device is configured to carry out the following steps when the first ultrasonic transducer (10) and the second ultrasonic transducer (20) are arranged on the inside of the pipeline
emitting a first signal (12), which runs in a first direction in the pipeline, by means of the first ultrasonic transducer (10); and
receiving a first response signal (22), which comes from a second direction in the pipeline, by means of the second ultrasonic transducer (20),
wherein the first direction and the second direction are different from each other, and wherein the first direction and the second direction have a respective propagation component perpendicular to one of the surfaces of the pipeline;
wherein the actuation unit is further configured to carry out the following steps receiving a second response signal, which comes from the first direction in the pipeline, by means of the first ultrasonic transducer (10) in response to the first signal;
emitting a second signal, which runs in the second direction in the pipeline, by means of the second ultrasonic transducer (20); and
receiving a third response signal, which comes from the first direction in the pipeline, by means of the first ultrasonic transducer (10) in response to the emission of the second signal,
**characterized in that** the device is configured to emit the first signal (12) and the second signal at the same time.

9. Device according to the preceding claim, wherein the first direction and the second direction each form substantially the same angle with the side of the pipeline facing toward the ultrasonic transducers (10, 20).

10. Device according to any of the two preceding claims, wherein the actuation unit is further configured to carry out the step of receiving a fourth response signal, which comes from the second direction in the pipeline, by means of the second ultrasonic transducer (20) in response to the second signal.

11. Device according to any of claims 8 to 10, further comprising a memory and an evaluation unit for storing and evaluating the first, second, third and/or fourth response signal in order to characterize a flaw.

12. Pig for inspecting a pipeline, comprising a device according to any of claims 8 to 11, wherein the pig is configured to be inserted into a pipeline and to inspect the wall of the pipeline from inside.

13. Use of a device according to any of claims 8 to 11 or of a pig according to claim 12 for inspecting a pipeline for flaws.

## Revendications

1. Procédé d'inspection d'une conduite (16) à la recherche de défauts, ledit procédé comprenant les étapes suivantes :
disposition d'un premier transducteur ultrasonique (10) et un deuxième transducteur ultrasonique (20) sur la face intérieure (14) de la conduite ;
émission d'un premier signal (12) se propageant dans une première direction à l'intérieur de la conduite au moyen du premier transducteur ultrasonique (10) ; et
réception, au moyen du deuxième transducteur ultrasonique (20), d'un premier signal de réponse (22) provenant d'une deuxième direction à l'intérieur de la conduite,
la première direction et la deuxième direction étant différentes l'une de l'autre, et la première direction et la deuxième direction présentant chacune une composante de propagation perpendiculaire à l'une des surfaces de la conduite ;
ledit procédé comprenant en outre les étapes suivantes :
réception, au moyen du premier transducteur ultrasonique (10), d'un deuxième signal de réponse provenant de la première direction dans la conduite, en réponse au premier signal ;
émission, au moyen du deuxième transducteur ultrasonique (20), d'un deuxième signal se propageant dans la deuxième direction dans la conduite ; et
réception, en réponse à l'émission du deuxième signal, d'un troisième signal de réponse provenant de la première direction dans la conduite au moyen du premier transducteur ultrasonique (10),
**caractérisé en ce que** le premier signal (12) et le deuxième signal sont émis simultanément.

2. Procédé selon la revendication 1, où la première direction et la deuxième direction forment chacune sensiblement le même angle avec la face de la conduite opposée aux transducteurs ultrasoniques (10, 20).

3. Procédé selon l'une des revendications précédentes, comprenant en outre l'étape de réception, au moyen du deuxième transducteur ultrasonique (20), d'un quatrième signal de réponse provenant de la deuxième direction dans la conduite, en réponse au deuxième signal.

4. Procédé selon l'une des revendications précédentes, comprenant en outre l'étape de stockage et d'analyse du premier, du deuxième, du troisième et/ou du quatrième signal de réponse afin de caractériser un défaut.

5. Procédé selon l'une des revendications précédentes, où le premier signal (12) pénètre dans la conduite par sa face intérieure et est au moins partiellement réfléchi sur une face extérieure (18) de la conduite, et se propage dans la deuxième direction en tant que premier signal de réponse (22).

6. Procédé selon la revendication précédente, où le premier signal forme un premier angle d'environ 45 degrés avec la face intérieure et/ou où le premier signal de réponse forme un deuxième angle d'environ 45 degrés avec la face intérieure.

7. Procédé selon l'une des revendications précédentes, où le premier transducteur ultrasonique et le deuxième transducteur ultrasonique sont espacés de la conduite.

8. Dispositif d'inspection d'une conduite à la recherche de défauts, comprenant :
un premier transducteur ultrasonique (10),
un deuxième transducteur ultrasonique (20), et
une unité de commande,
ledit dispositif étant configuré de manière à exécuter les étapes suivantes, lorsque le premier transducteur ultrasonique (10) et le deuxième transducteur ultrasonique (20) sont disposés sur la face intérieure de la conduite :
émission d'un premier signal (12) se propageant dans une première direction à l'intérieur de la conduite au moyen du premier transducteur ultrasonique (10) ; et
réception, au moyen du deuxième transducteur ultrasonique (20), d'un premier signal de réponse (22) provenant d'une deuxième direction à l'intérieur de la conduite,
la première direction et la deuxième direction étant différentes l'une de l'autre, et la première direction et la deuxième direction présentant chacune une composante de propagation perpendiculaire à l'une des surfaces de la conduite ;
ladite unité de commande étant en outre configurée pour exécuter les étapes suivantes :
réception, au moyen du premier transducteur ultrasonique (10), d'un deuxième signal de réponse provenant de la première direction dans la conduite, en réponse au premier signal ;
émission, au moyen du deuxième transducteur ultrasonique (20), d'un deuxième signal se propageant dans la deuxième direction dans la conduite ; et
réception, en réponse à l'émission du deuxième signal, d'un troisième signal de réponse provenant de la première direction dans la conduite au moyen du premier transducteur ultrasonique (10),
**caractérisé en ce que** ledit dispositif est configuré pour émettre simultanément le premier signal (12) et le deuxième signal.

9. Dispositif selon la revendication précédente, où la première direction et la deuxième direction forment chacune sensiblement le même angle avec la face de la conduite opposée aux transducteurs ultrasoniques (10, 20).

10. Dispositif selon l'une des deux revendications précédentes, où l'unité de commande est en outre configurée pour exécuter l'étape de réception, au moyen du deuxième transducteur ultrasonique (20), d'un quatrième signal de réponse provenant de la deuxième direction dans la conduite en réponse au deuxième signal.

11. Dispositif selon l'une des revendications 8 à 10, comprenant en outre une mémoire et une unité d'analyse pour le stockage et l'analyse du premier, du deuxième, du troisième et/ou du quatrième signal de réponse afin de caractériser un défaut.

12. Racleur pour l'inspection de conduites, comprenant un dispositif selon l'une des revendications 8 à 11, ledit racleur étant prévu pour être introduit dans une conduite et pour inspecter la paroi de la conduite depuis l'intérieur.

13. Utilisation d'un dispositif selon l'une des revendications 8 à 11 ou d'un racleur selon la revendication 12 pour inspecter une conduite à la recherche de défauts.
